# EUROPEAN PATENT APPLICATION

(11) **EP 4 545 326 A1**
(43) Date of publication of application: **30.04.2025**
(21) Application number: 23205958.4
(22) Date of filing: 26.10.2023
(51) Int. Cl.: B60K 1/04, H01M 50/202, H01M 50/207, H01M 50/258

(54) **A BATTERY MODULE MEMBER, A BATTERY MODULE ASSEMBLY, A BATTERY PACK, AND A VEHICLE**

(71) Applicant: VOLVO TRUCK CORPORATION, 405 08 Göteborg (SE)
(72) Inventor: Arnesson, Simon, 475 32 Öckerö (SE); Rout, Dhirendra, 422 54 Göteborg (SE)
(74) Representative: Kransell & Wennborg KB

(57) **Abstract**

The disclosure relates to a battery module member (1, 1') for a battery module assembly (2) for a battery pack (3), wherein the battery module member (1, 1') has a longitudinal extension in a longitudinal direction (L), a width extension in a width direction (W) and a height extension in a height direction (H), and wherein the battery module member (1, 1') is formed as a frame configured to enclose and retain a plurality of battery cells (21), as seen in a sectional plane defined by the longitudinal direction (L) and the width direction (W). The disclosure also relates to a battery module assembly (2), a battery pack (3) and a vehicle (4).

## Description

### TECHNICAL FIELD

The disclosure relates generally to electric batteries, i.e., energy storage systems. In particular aspects, the disclosure relates to a battery module member, a battery module assembly, a battery pack, and a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

A battery pack typically comprises a plurality of battery cells, i.e., electrochemical battery cells, which are electrically connected in series and/or in parallel. The battery pack may comprise one or more separate battery modules, wherein each module comprises a stack of battery cells. The battery cells may be cylindrical battery cells. Alternatively, the battery cells may be prismatic battery cells.

Due to the electrification trend, such as for vehicles, there is an ongoing strive to develop improved technology relating to battery packs and battery modules, such as to provide more cost-effective configurations which facilitate assembly and manufacturing.

### SUMMARY

According to a first aspect of the disclosure, a battery module member for a battery module assembly for a battery pack is provided. The battery module member has a longitudinal extension in a longitudinal direction, a width extension in a width direction and a height extension in a height direction. The battery module member is formed as a frame configured to enclose and retain a plurality of battery cells, as seen in a sectional plane defined by the longitudinal direction and the width direction, and the battery module member comprises:
- a first surface facing upwardly in the height direction and a second surface facing downwardly in the height direction,
- at least one first hole configured to receive a fastening member, the at least one first hole extending in the height direction through the battery module member with a first opening on the first surface and a second opening on the second surface,
- at least one second hole extending in the height direction with a third opening on the first surface,
wherein the second hole is configured to receive and retain a fastening member by an interference fit between the fastening member and a second hole inner surface defining the second hole. The first aspect of the disclosure may seek to provide a battery module member which is beneficial for assembly and manufacturing of the battery module assembly and/or the battery pack. A technical benefit may include that the battery module assembly and/or the battery pack may be built by use of fewer types of different parts, such as by one type of battery module member. For example, more than one battery module member according to the first aspect of the disclosure of the same or similar configuration may be used for building the battery module assembly and/or battery pack. This may imply a configuration which is easy to scale in size in a cost-effective manner.

Optionally in some examples, including in at least one preferred example, the first hole is defined by a substantially smooth first hole inner surface. A technical benefit may include that insertion of a fastening member into the first hole may be facilitated, wherein after insertion the fastening member extends completely through the battery module member such that it protrudes from the second surface and into a fixation hole of another member below the second surface, thereby fixing the battery module member to the other member.

Optionally in some examples, including in at least one preferred example, the second hole inner surface comprises a thread for the fastening member. A technical benefit may include that fixation to another member above the battery module member may be facilitated, resulting in a robust interference fit between the fastening member and the thread.

Optionally in some examples, including in at least one preferred example, a diameter of the first hole is larger than a diameter of the second hole. A technical benefit may include that the same type of fastening member may be used for the first and the second holes. For example, the fastening members may comprise a first elongated section without any thread which is configured to be provided in the first hole, followed by a second elongated section with a thread, which is configured to be provided in the second hole. In some examples, the diameter of the first and second holes may be substantially the same once a fastening member has been inserted into the second hole. The diameter of the second hole may in some examples be measured as a minimum diameter defined by outer portions of threads in the second hole.

Optionally in some examples, including in at least one preferred example, the first hole comprises a first hole portion which extends downwardly from the first surface towards the second surface and a second hole portion which extends from the first hole portion to the second surface, wherein the first hole portion has a larger diameter than the second hole portion. A technical benefit may include that a fastening member head of a fastening member may be provided in the first hole portion such that the fastening member does not protrude from the first surface. In some examples, the first hole portion has a tapered profile, as seen in a sectional view defined by the height direction and a direction which is perpendicular to the height direction. In other examples, the first hole portion has a substantially straight profile, and/or a stepped profile as seen in a sectional view defined by the height direction and a direction which is perpendicular to the height direction.

Optionally in some examples, including in at least one preferred example, the battery module member comprises a plurality of first holes and a plurality of second holes, wherein the plurality of first and second holes are arranged along an extension of the first surface, preferably in a repeated pattern. A technical benefit may include that a reliable and robust connection to another member is achieved.

Optionally in some examples, including in at least one preferred example, the second hole is further defined by a second hole bottom surface of the battery module member. A technical benefit may include that fewer openings may be provided on the second surface. Fewer holes which extend completely through the battery module member may result in a more cost-effective configuration. Another technical benefit may include that it is easier for a user to identify which one of the first surface and the second surface which is an upper surface and a bottom surface, respectively. This may facilitate an assembly operation of the battery module assembly/battery pack for the user. The user may be a human and/or a robot.

According to a second aspect of the disclosure, a battery module assembly for a battery pack is provided. The battery module assembly comprises a first battery cell layer comprising a plurality of battery cells which are enclosed and retained by a battery module member according to any one of the examples of the first aspect of the disclosure. The second aspect of the disclosure may seek to provide a battery module assembly which is beneficial for assembly and manufacturing of the battery module assembly and/or the battery pack. A technical benefit may include that the battery module assembly and/or the battery pack may be built by use of fewer types of different parts, such as by one type of battery module member. For example, more than one battery module member according to the first aspect of the disclosure of the same or similar configuration may be used for building the battery module assembly and/or battery pack. This may imply a configuration which is easy to scale in size in a cost-effective manner. A longitudinal direction, a width direction, and a height direction of the battery module assembly correspond to the longitudinal direction, the width direction, and the height direction, respectively, of the battery module member.

Optionally in some examples, including in at least one preferred example, the battery module assembly comprises a second battery cell layer provided on top of the first battery cell layer, as seen in the height direction, wherein the second battery cell layer comprises a plurality of battery cells which are enclosed and retained by an auxiliary battery module member according to any one of the examples of the first aspect of the disclosure, and wherein the battery module assembly further comprises at least one first fastening member which connects the battery module member of the first battery cell layer to the auxiliary battery module member of the second battery cell layer. A technical benefit may include that a battery module assembly with several battery cell layers is provided in a cost-effective manner, i.e., by using the same or similar type of battery module member for each battery cell layer.

Optionally in some examples, including in at least one preferred example, the at least one first fastening member extends through the at least one first hole of the auxiliary battery module member of the second battery cell layer and into the at least one second hole of the battery module member of the first battery cell layer. A technical benefit may include that a reliable and robust connection is provided. Another technical benefit may include that no intermediate member between the two battery cell layers needs to be used, implying a more cost-effective configuration.

Optionally in some examples, including in at least one preferred example, each one of the auxiliary battery module member of the second battery cell layer and the battery module member of the first battery cell layer comprises a first side and a second side of the frame which extend in the longitudinal direction and are offset in the width direction, and a third side and a fourth side of the frame which extend in the width direction and are offset in the longitudinal direction, wherein a first hole of the at least one first hole is provided on the first side and a second hole of the at least one second hole is provided on the second side, wherein the first hole on the first side is provided a first longitudinal distance from the third side and the second hole on the second side is provided a second longitudinal distance from the fourth side, and wherein the first and second longitudinal distances are substantially the same. A technical benefit may include that the first hole of one of the battery module members will be aligned with the second hole of the other one of the battery module members by rotating one of the battery module members relative to the other. This may imply a cost-effective configuration where only one type of battery module member is used for building several battery cell layers.

Optionally in some examples, including in at least one preferred example, the battery module assembly comprises an intermediate spacer member provided in-between the battery module member of the first battery cell layer and the auxiliary battery module member of the second battery cell layer, wherein the intermediate spacer member comprises:
- a third surface facing upwardly in the height direction and a fourth surface facing downwardly in the height direction,
- at least one third hole configured to receive a fastening member, the at least one third hole extending in the height direction through the intermediate spacer member with a fourth opening on the third surface and a fifth opening on the fourth surface,
- at least one fourth hole extending in the height direction with a sixth opening on the third surface,
wherein the fourth hole is configured to receive and retain a fastening member by an interference fit between the fastening member and a fourth hole inner surface defining the fourth holes.

A technical benefit may include that the battery module assembly and/or the battery pack may be built by use of fewer types of different parts, such as by one type of battery module member and one type of intermediate spacer member.

Optionally in some examples, including in at least one preferred example, the at least one first fastening member extends through the first hole of the auxiliary battery module member of the second battery cell layer and into the fourth hole of the intermediate spacer member, wherein the battery module assembly further comprises at least one second fastening member, and wherein the at least one second fastening member extends through the at least one third hole and into the second hole of the battery module member of the first battery cell layer.

Optionally in some examples, including in at least one preferred example, the intermediate spacer member is formed as a frame and/or comprises at least two separate beam members. Being formed as a frame implies that the intermediate spacer member is similar to the battery module members, and comprising at least two separate members may result in more space for electrical cables, cooling conduits, etc.

Optionally in some examples, including in at least one preferred example, at least one battery module member of the battery module assembly has a height which is less than a height of the battery cells enclosed and retained by the at least one battery module member. A technical benefit may include a facilitated stacking of battery cell layers on top of each other. A technical benefit may additionally or alternatively include that more space for electrical cables, cooling conduits, etc., is enabled.

According to a third aspect of the disclosure, a battery pack comprising a battery module assembly according to any one of the examples of the second aspect of the disclosure is provided. Advantages and effects of the third aspect of the disclosure are analogous to the advantages and effects of the first and second aspects of the disclosure.

Optionally in some examples, including in at least one preferred example, the battery pack further comprises a housing defining an inner space for retaining the battery module assembly.

Optionally in some examples, including in at least one preferred example, the housing has a longitudinal extension in a longitudinal direction which corresponds to the longitudinal direction of the battery module member of the first battery cell layer, a width extension in a width direction which corresponds to the width direction of the battery module member of the first battery cell layer and a height extension in a height direction which corresponds to the height direction of the battery module member of the first battery cell layer, wherein the housing comprises at least one ledge in the proximity of a bottom surface of the housing, wherein the at least one ledge comprises a fifth hole with a seventh opening facing upwardly in the height direction, wherein the battery pack further comprises at least one third fastening member, and wherein the at least one third fastening member extends through the at least one first hole of the battery module member of the first battery cell layer and into the fifth hole of the at least one ledge. A technical benefit may include that a reliable and robust connection to the housing is achieved.

Optionally in some examples, including in at least one preferred example, at least one battery module member is attached to the housing by an auxiliary fastening member. A technical benefit may include that a more reliable and robust connection to the housing is achieved.

Optionally in some examples, including in at least one preferred example, the battery pack further comprises at least one cooling element for cooling the battery cells in the battery pack.

Optionally in some examples, including in at least one preferred example, the battery cells are cylindrical cells and/or prismatic cells.

According to a third aspect of the disclosure, a vehicle is provided. The vehicle comprises a battery module member according to any one of the examples of the first aspect of the disclosure, a battery module assembly according to any one of the examples of the second aspect of the disclosure, and/or a battery pack according to any one of the examples of the third aspect of the disclosure.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is an exemplary vehicle in a side view according to an example.
**FIG. 2a** is an exemplary battery module member in a perspective view according to an example.
**FIG. 2b** is an exemplary battery module member in a schematic side view according to an example.
**FIG. 3** is an exemplary battery module assembly in a perspective view according to an example.
**FIG. 4** is an exemplary battery module assembly in a sectional view according to an example.
**FIG. 5a** is an exemplary intermediate spacer member in a perspective view according to an example.
**FIG. 5b** is an exemplary intermediate spacer member in a schematic side view according to an example.
**FIG. 5c** is an exemplary intermediate spacer member in a perspective view according to an example.
**FIG. 6a** is an exemplary battery module assembly in a schematic side view according to an example.
**FIG. 6b** is an exemplary battery module assembly in a schematic side view according to an example.
**FIG. 7** is an exemplary battery module member in a top view according to an example.
**FIG. 8** is an exemplary battery pack in a sectional view according to an example.

The drawings are schematic and may not necessarily be drawn to scale. Like reference characters throughout the drawings refer to the same or similar element unless stated otherwise. Some reference characters in some of the drawings may have been omitted for the sake of clarity.

### DETAILED DESCRIPTION

The detailed description set forth below provides information and examples of the disclosed technology with sufficient detail to enable those skilled in the art to practice the disclosure.

An aim of the present disclosure is to provide an improved battery module member, battery module assembly, battery pack, and/or vehicle, which alleviate one or more drawbacks of the prior art, or which at least provide suitable alternatives. For example, an aim of the present disclosure is to provide a battery module assembly and/or a battery pack which is/are easy to assemble, manufacture, and/or is/are cost-effective.

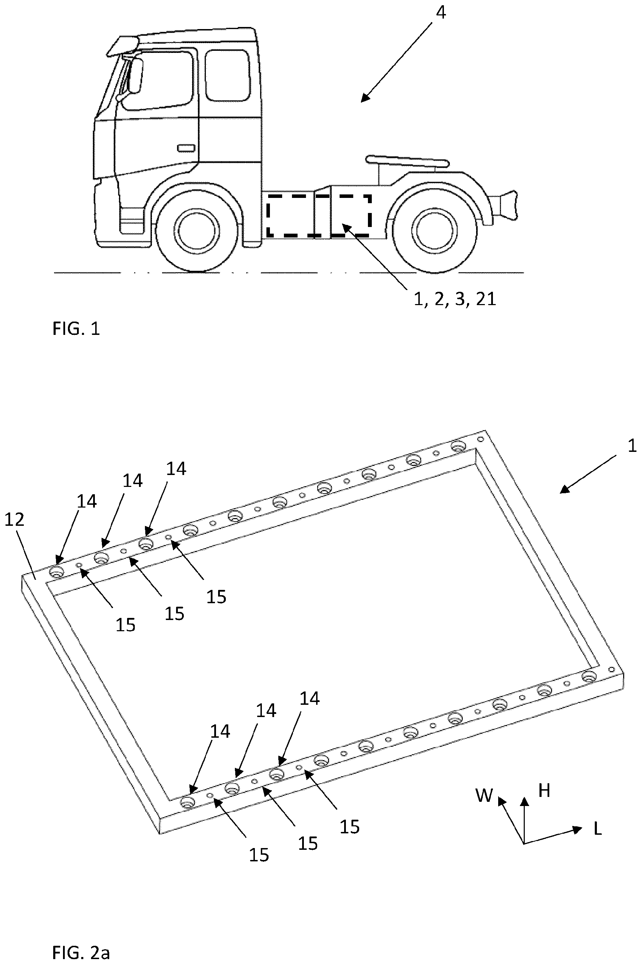

**FIG. 1** is an exemplary vehicle 4 in a side view according to an example. The vehicle 4 is in this example a towing truck for towing one or more trailers (not shown). However, it shall be noted that the disclosure is not limited to this particular vehicle, but any other vehicle may be used, such as another type of truck, a bus, construction equipment, a passenger car, marine vessel, etc. The vehicle 4 comprises a battery module member 1, a battery module assembly 2 and a battery pack 3 according to examples of the present disclosure. Hence, the vehicle 4 is an electric vehicle which uses electric energy for propulsion. The vehicle 4 may be a fully electric vehicle or a hybrid vehicle. The hybrid vehicle may comprise another power source which is not electric, such as an internal combustion engine. The vehicle 4 may additionally or alternatively comprise a fuel cell for generating electric energy. The electric energy is stored in electrochemical battery cells 21 of the battery pack 3. The battery pack 3 is typically a high-voltage battery pack, such as with a voltage level of at least 400V. The electrochemical battery cells 21 may be any type of cells, such as lithium-ion cells. The battery pack 3 as disclosed herein may not necessarily be provided in a vehicle, but may alternatively be provided in any other unit, such as in any portable unit or any stationary unit, e.g., a building.

**FIG. 2a** is an exemplary battery module member 1 for a battery module assembly 2 (not shown) for a battery pack 3 (not shown) in perspective view according to an example. The battery module member 1 has a longitudinal extension in a longitudinal direction L, a width extension in a width direction W and a height extension in a height direction H.

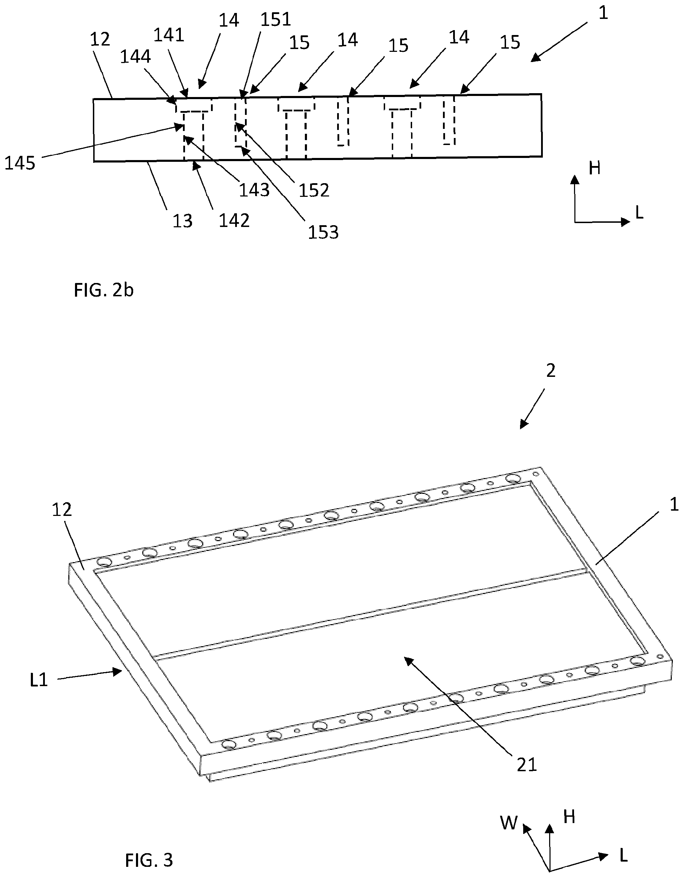

**FIG. 2b** is a schematic side view of the battery module member 1 as shown in FIG. 2a.

The battery module member 1 is formed as a frame configured to enclose and retain a plurality of battery cells 21 (not shown), as seen in a sectional plane defined by the longitudinal direction L and the width direction W.

The battery module member 1 comprises:
- a first surface 12 facing upwardly in the height direction H and a second surface 13 facing downwardly in the height direction H,
- at least one first hole 14 configured to receive a fastening member, the at least one first hole 14 extending in the height direction H through the battery module member 1 with a first opening 141 on the first surface 12 and a second opening 142 on the second surface 13.

In the shown example, the battery module member 1 comprises a plurality of first holes 14.

The battery module member 1 further comprises at least one second hole 15 extending in the height direction H with a third opening 151 on the first surface 12. The second hole 15 is configured to receive and retain a fastening member by an interference fit between the fastening member and a second hole inner surface 152 defining the second hole 15.

In the shown example, the battery module member 1 comprises a plurality of second holes 15.

The first hole 14, as for example shown in FIG. 2b, may be defined by a substantially smooth first hole inner surface 143. For example, the smooth inner surface 143 may be a cylindrical surface for enclosing a fastening member, such as a screw, rivet or bolt.

The second hole inner surface 152 may comprise a thread for the fastening member, e.g., in contrast to a smooth surface. Accordingly, the fastening member (not shown in FIG. 2b) may comprise a corresponding thread so that an interference fit between the fastening member and the second hole inner surface 152 can be achieved.

As shown in FIGS. 2a-b, a diameter of the first hole 14 may be larger than a diameter of the second hole 15. This configuration may be present at least before a fastening member has been inserted into the second hole 15. Accordingly, in some examples, the diameter of the second hole 15 may change, i.e., increase, when a fastening member is inserted therein, such that the interference fit is achieved.

As shown in FIG. 2a, the first hole 14 may comprise a first hole portion 144 which extends downwardly from the first surface 12 towards the second surface 13 and a second hole portion 145 which extends from the first hole portion 144 to the second surface 13, wherein the first hole portion 144 has a larger diameter than the second hole portion 145. Thereby, a head of a fastening member may be received, such as completely received, in the first hole portion 144 so that the fastening member does not protrude from the first surface 12.

As mentioned in the above, the battery module member 1 may comprise a plurality of first holes 14 and a plurality of second holes 15. The plurality of first and second holes 14, 15 may as shown in e.g. FIG. 2a be arranged along an extension of the first surface 12, preferably in a repeated pattern, e.g., one after the other, and so on. In the shown example, the holes 14, 15 extend on respective longitudinal extending sides of the frame 1, i.e., the battery module member 1. It shall be noted that other repeated patterns are also possible, such as two first holes followed by two second holes, and so on. In other words, the repeated pattern may in some examples be defined as a first set of first holes followed by a second set of second holes, and so on, along an extension of the first surface. Other patterns are also conceivable, such as a first set of first holes followed by a second set of second holes along an extension of the first surface.

As shown in FIG. 2b, the second hole 15 may further be defined by a second hole bottom surface 153 of the battery module member 1. Accordingly, in this example, the second hole 15 does not extend through the battery module member 15 between the first surface 12 and the second surface 13, i.e., it does not extend completely through the battery module member 1.

**FIG. 3** shows an example of a battery module assembly 2 for a battery pack 3 in a perspective view. The battery module assembly 2 comprises a first battery cell layer L1 comprising a plurality of battery cells 21 which are enclosed and retained by a battery module member 1 according to any one of the examples of the first aspect of the disclosure. For example, the battery module member 1 may be the battery module member 1 as shown in FIGS. 2a-b. The plurality of battery cells 21, which are schematically illustrated as a box in FIG. 3, may be any type of battery cells, for example cylindrical battery cells or prismatic battery cells, such as 10-100 battery cells. Typically, the battery cells' longitudinal extension may correspond to the height direction H. For example, if cylindrical battery cells are used, the center axes of the cylindrical battery cells may extend along the height direction H.

As may be gleaned from FIG. 3, the plurality of battery cells 21 may have a larger extension in the height direction H than an extension of the battery module member 1 in the height direction H. For example, as shown, the plurality of battery cells 21 may protrude below the battery module member 1 and top surfaces of the plurality of battery cells 21 may be arranged so that they do not protrude upwardly from the first surface 12. This configuration has been shown to result in improved stacking of several battery cell layers on top of each other in the height direction H.

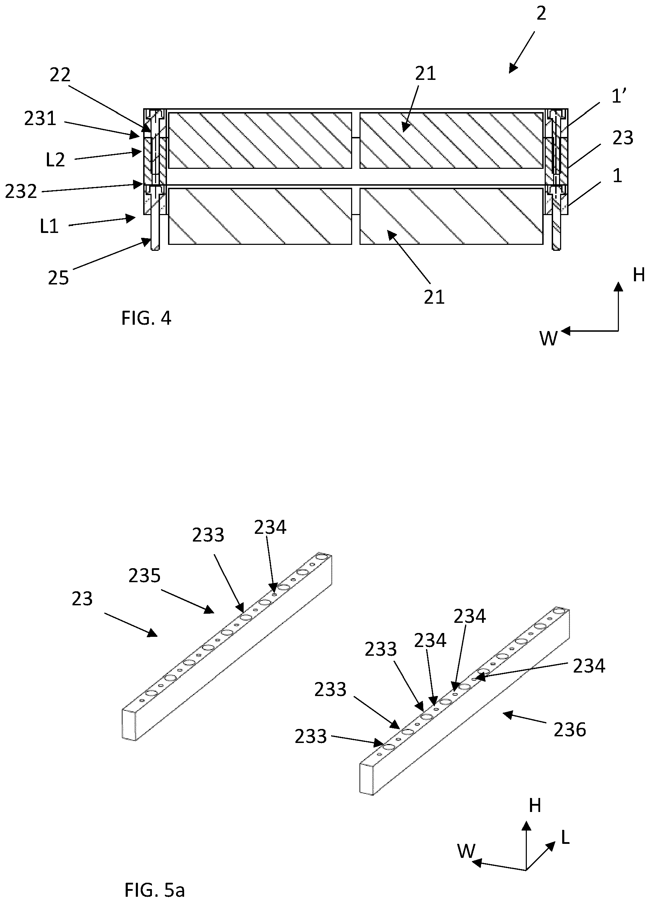

**FIG. 4** depicts a sectional view of an exemplary battery module assembly 2 according to an example of the disclosure. The sectional view is defined by the height direction H and the width direction W. In addition to a first battery cell layer L1, e.g., as shown in FIG. 3, the battery module assembly 2 in FIG. 4 further comprises a second battery cell layer L2 provided on top of the first battery cell layer L1, as seen in the height direction H. The second battery cell layer L2 comprises a plurality of battery cells 21 which are enclosed and retained by an auxiliary battery module member 1' according to any one of the examples of the first aspect of the disclosure. For example, the second battery cell layer L2 may be like the first battery cell layer L1 shown in FIG. 3. The battery module assembly 2 further comprises at least one first fastening member 22 which connects the battery module member 1 of the first battery cell layer L1 to the auxiliary battery module member 1' of the second battery cell layer L2.

In the example shown in FIG. 4, the battery module assembly 2 further comprises an intermediate spacer member 23 which is provided in-between the battery module member 1 of the first battery cell layer L1 and the auxiliary battery module member 1' of the second battery cell layer L2.

**FIGS. 5a****-c** show examples of an intermediate spacer member 23. For example, the intermediate spacer members 23 shown in FIGS. 5a-c may be used in the battery module assembly 2 shown in FIG. 4.

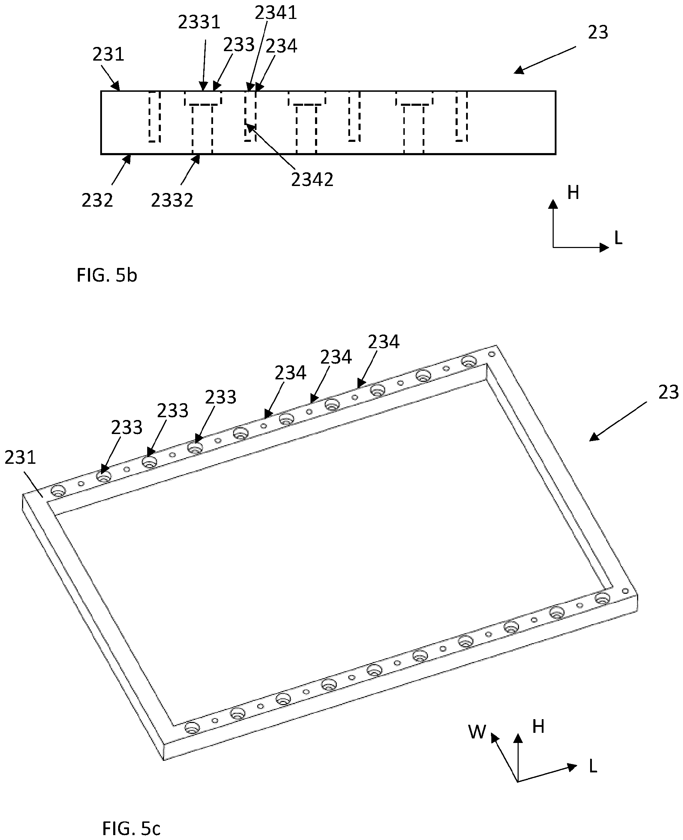

FIGS. 5a and 5b show perspective views of respective examples of intermediate spacer members 23. FIG. 5b show a schematic side view of an intermediate spacer member 23. For example, the side view in FIG. 5b may be a side view of the intermediate spacer member 23 shown in FIG. 5a and/or of the intermediate spacer member 23 shown in FIG. 5c.

With reference to e.g., FIGS. 5a-c, the intermediate spacer member 23 comprises:
- a third surface 231 facing upwardly in the height direction H and a fourth surface 232 facing downwardly in the height direction H,
- at least one third hole 233 configured to receive a fastening member 24, the at least one third hole 233 extending in the height direction H through the intermediate spacer member 23 with a fourth opening 2331 on the third surface 231 and a fifth opening 2332 on the fourth surface 232,
- at least one fourth hole 234 extending in the height direction H with a sixth opening 2341 on the third surface 231,
wherein the fourth hole 234 is configured to receive and retain a fastening member 22 by an interference fit between the fastening member 22 and a fourth hole inner surface 2342 defining the fourth hole 234.

The intermediate spacer member 23 may as shown in FIG. 5a comprise at least two separate beam members 235, 236. In the shown example, a longitudinal extension of the beam members 235, 236 extends in the longitudinal direction L. The intermediate spacer member 23 may as shown in FIG. 5c alternatively be formed as a frame, e.g., similar to the battery module member 1, 1'. It shall be noted that the hole configurations of the intermediate spacer member 23 may be similar to any one of the example configurations of the holes 14, 15 of the battery module member 1, 1' as disclosed herein.

The hole configuration of the intermediate spacer member 23 may be similar to the hole configuration of the battery module members 1, 1', and configured so that the intermediate spacer member 23 connects the battery module members 1, 1' to each other.

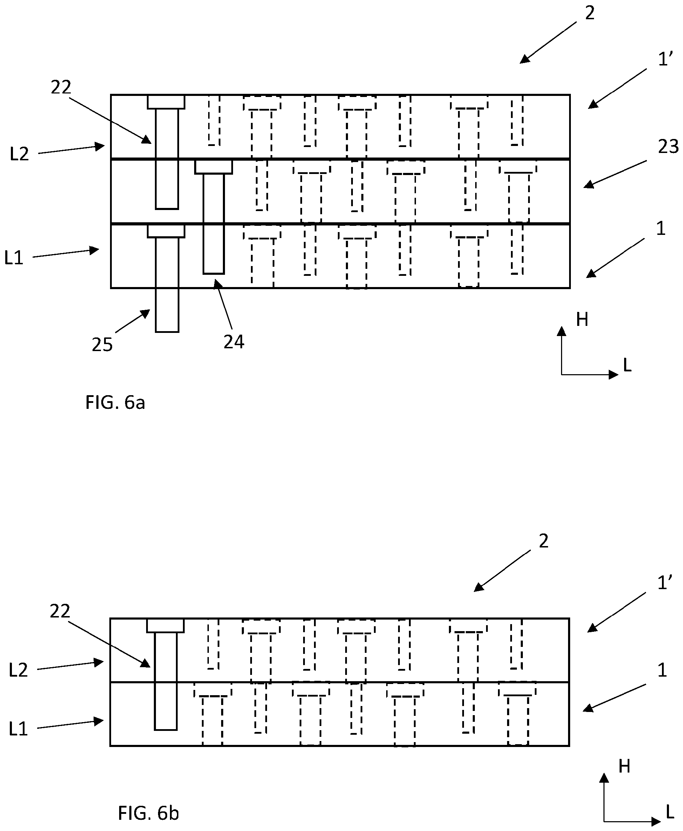

**FIG. 6a** shows an example of a battery module assembly 2 with such a connection in a schematic side view. The battery module assembly 2 in FIG. 6a may for example be the battery module assembly shown in FIG. 4.

With reference to e.g., FIG. 6a, the at least one first fastening member 22 may extend through the first hole 14 of the auxiliary battery module member 1' of the second battery cell layer L2 and into the fourth hole 234 of the intermediate spacer member 23, wherein the battery module assembly 2 further comprises at least one second fastening member 24, and wherein the at least one second fastening member 24 extends through the at least one third hole 233 and into the second hole 15 of the battery module member 1 of the first battery cell layer L1.

**FIG. 6b** shows an example of a battery module assembly 2 with another connection between the two battery cell layers L1, L2. FIG. 6b is also a schematic side view, similar to FIG. 6a. In the shown example, the at least one first fastening member 22 extends through the at least one first hole 14 of the auxiliary battery module member 1' of the second battery cell layer L2 and into the at least one second hole 15 of the battery module member 1 of the first battery cell layer L1. Accordingly, in this example there is no intermediate spacer member 23 in-between the two battery module members 1, 1'.

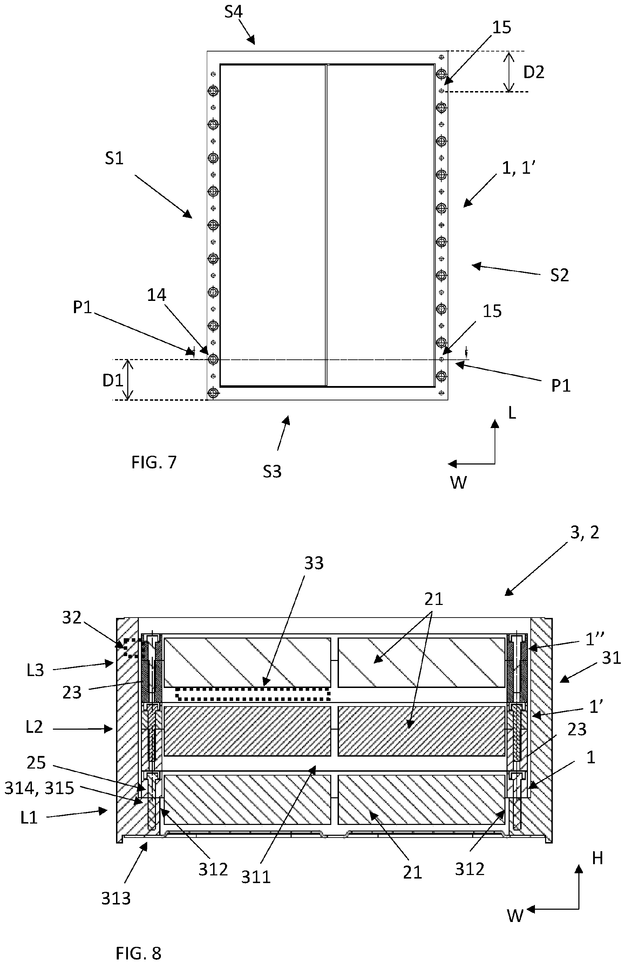

**FIG. 7** shows an example of a battery module member 1, 1' in a top view. The battery module member 1, 1' in FIG. 7 may for example be used for each battery cell layer L1, L2 as shown in FIG. 6b, i.e., when there is no intermediate spacer member 23. Each one of the auxiliary battery module member 1' of the second battery cell layer L2 and the battery module member 1 of the first battery cell layer L1 comprises a first side S1 and a second side S2 of the frame which extend in the longitudinal direction L and are offset in the width direction W, and a third side S3 and a fourth side S4 of the frame which extend in the width direction W and are offset in the longitudinal direction L. A first hole 14 of the at least one first hole 14 is provided on the first side S1 and a second hole 15 of the at least one second hole 15 is provided on the second side S2. The first hole 14 on the first side S1 is provided a first longitudinal distance D1 from the third side S3 and the second hole 15 on the second side S2 is provided a second longitudinal distance D2 from the fourth side S4. The first and second longitudinal distances D1, D2 are substantially the same. This results in that the same hole configuration can be used for each battery module member 1, 1'. The hole configuration may be a repeated pattern as disclosed herein, wherein first and second holes 14, 15 are configured as mentioned in the above, i.e., each first hole 14 on the first side S1 has a corresponding second hole 15 on the second side S2 with substantially the same longitudinal distances as mentioned in the above. For example, as further shown, each first hole 14 on the first side S1 may be provided at a longitudinal position P1 which corresponds to a longitudinal position P1 of a second hole 15 on the second side S2. Accordingly, each battery cell layer L1, L2 may have a battery module member 1, 1' with the same hole configuration as the battery module member(s) of the other battery cell layer(s) L2. The battery module members 1, 1' are connectable after rotating one of the battery module members 1, 1' 180 degrees about an axis which extends along the height direction H. The first and second distances D1, D2 may as shown be measured from a center axis of the respective hole to an outermost longitudinal end of the frame.

**FIG. 8** shows an exemplary battery pack 3 in a sectional view according to an example. The battery pack 3 may as shown comprise a battery module assembly 2 as disclosed herein. In the shown example the battery pack 3 comprises three battery cell layers L1, L2, L3. The third battery cell layer L3 in FIG. 8 comprises a battery module member 1" as disclosed herein.

As shown, the battery pack 3 may further comprise a housing 31 defining an inner space 311 for retaining the battery module assembly 2. It shall be noted that the directions of the battery pack 3 correspond to the above-mentioned directions L, W, H of the battery module assembly 2 and the battery module member 1, 1".

More specifically, in the shown example, the housing 31 has a longitudinal extension in a longitudinal direction L which corresponds to the longitudinal direction L of the battery module member 1 of the first battery cell layer L 1, a width extension in a width direction W which corresponds to the width direction W of the battery module member 1 of the first battery cell layer L1 and a height extension in a height direction H which corresponds to the height direction H of the battery module member 1 of the first battery cell layer L1. The housing 31 comprises at least one ledge 312 in the proximity of a bottom surface 313 of the housing 31, as seen in the height direction H. The at least one ledge 312 comprises a fifth hole 314 with a seventh opening 315 facing upwardly in the height direction H. The battery pack 3 further comprises at least one third fastening member 25 (see also FIG. 6a), and the at least one third fastening member 25 extends through the at least one first hole 14 of the battery module member 1 of the first battery cell layer L1 and into the fifth hole 314 of the at least one ledge 312. In the shown example, the housing 31 comprises two ledges 312, one provided on one side of the housing 31 and another one provided on the other side, as seen in the width direction W.

As further shown, the battery cells 21 of the battery cell layer L1 at the bottom of the housing 31 protrudes downwardly below the battery module member 1 towards the bottom surface 313.

At least one battery module member 1" may be attached to the housing 31 by an auxiliary fastening member 32. In the shown example, the battery module member 1" provided at the top of the battery pack 3 is attached to the housing 31 by an auxiliary fastening member 32. The auxiliary fastening member 32 may for example be a bracket formed by metal and/or a polymer, which e.g., is attached to the housing 31 by a screw, rivet, bolt, and/or weld. The auxiliary fastening member 32 may result in a more robust and reliable battery pack 3, reducing the risk of any unwanted movements/vibrations of the battery module assembly 2 in the housing 31.

The battery pack 3 may further comprise at least one cooling element 33 for cooling the battery cells 21 in the battery pack 3. The at least one cooling element 33 may as shown be provided in-between two battery cell layers L2, L3. It shall be noted that cooling elements may be provided between each battery cell layer L1, L2, L3. The at least one cooling element 33 may comprise a cooling circuit for coolant.

In the below, possible features and feature combinations of the present disclosure are presented as a list of Examples.

Example 1: A battery module member (1, 1') for a battery module assembly (2) for a battery pack (3), wherein the battery module member (1, 1') has a longitudinal extension in a longitudinal direction (L), a width extension in a width direction (W) and a height extension in a height direction (H), wherein the battery module member (1, 1') is formed as a frame configured to enclose and retain a plurality of battery cells (21), as seen in a sectional plane defined by the longitudinal direction (L) and the width direction (W), and wherein the battery module member (1, 1') comprises:
- a first surface (12) facing upwardly in the height direction (H) and a second surface (13) facing downwardly in the height direction (H),
- at least one first hole (14) configured to receive a fastening member (22, 25), the at least one first hole (14) extending in the height direction (H) through the battery module member (1, 1') with a first opening (141) on the first surface (12) and a second opening (142) on the second surface (13),
- at least one second hole (15) extending in the height direction (H) with a third opening (151) on the first surface (12),
wherein the second hole (15) is configured to receive and retain a fastening member (22, 24) by an interference fit between the fastening member (22, 24) and a second hole inner surface (152) defining the second hole (15).

Example 2: The battery module member (1, 1') according to example 1, wherein the first hole (14) is defined by a substantially smooth first hole inner surface (143).

Example 3: The battery module member (1, 1') according to any one of the preceding examples, wherein the second hole inner surface (152) comprises a thread for the fastening member (22, 24).

Example 4: The battery module member (1, 1') according to any one of the preceding examples, wherein a diameter of the first hole (14) is larger than a diameter of the second hole (15).

Example 5: The battery module member (1, 1') according to any one of the preceding examples, wherein the first hole (14) comprises a first hole portion (144) which extends downwardly from the first surface (12) towards the second surface (13) and a second hole portion (145) which extends from the first hole portion (144) to the second surface (13), wherein the first hole portion (144) has a larger diameter than the second hole portion (145).

Example 6: The battery module member (1, 1') according to any one of the preceding examples, comprising a plurality of first holes (14) and a plurality of second holes (15), wherein the plurality of first and second holes (14, 15) are arranged along an extension of the first surface (12), preferably in a repeated pattern.

Example 7: The battery module member (1, 1') according to any one of the preceding examples, wherein the second hole (15) is further defined by a second hole bottom surface (153) of the battery module member (1).

Example 8: A battery module assembly (2) for a battery pack (3), comprising a first battery cell layer (L1) comprising a plurality of battery cells (21) which are enclosed and retained by a battery module member (1, 1') according to any one of the preceding examples.

Example 9: The battery module assembly (2) according to example 8, comprising a second battery cell layer (L2) provided on top of the first battery cell layer (L 1), as seen in the height direction (H), wherein the second battery cell layer (L2) comprises a plurality of battery cells (21) which are enclosed and retained by an auxiliary battery module member (1') according to any one of examples 1-7, and wherein the battery module assembly (2) further comprises at least one first fastening member (22, 24) which connects the battery module member (1) of the first battery cell layer (L1) to the auxiliary battery module member (1') of the second battery cell layer (L2).

Example 10: The battery module assembly (2) according to example 9, wherein the at least one first fastening member (22) extends through the at least one first hole (14) of the auxiliary battery module member (1') of the second battery cell layer (L2) and into the at least one second hole (15) of the battery module member (1) of the first battery cell layer (L1).

Example 11: The battery module assembly (2) according to example 10, wherein each one of the auxiliary battery module member (1') of the second battery cell layer (L2) and the battery module member (1) of the first battery cell layer (L1) comprises a first side (S1) and a second side (S2) of the frame which extend in the longitudinal direction (L) and are offset in the width direction (W), and a third side (S3) and a fourth side (S4) of the frame which extend in the width direction (W) and are offset in the longitudinal direction (L), wherein a first hole (14) of the at least one first hole (14) is provided on the first side (S1) and a second hole (15) of the at least one second hole (15) is provided on the second side (S2), wherein the first hole (14) on the first side (S1) is provided a first longitudinal distance (D1) from the third side (S3) and the second hole (15) on the second side (S2) is provided a second longitudinal distance (D2) from the fourth side (S4), and wherein the first and second longitudinal distances (D1, D2) are substantially the same..

Example 12: The battery module assembly (2) according to example 9, further comprising an intermediate spacer member (23) provided in-between the battery module member (1) of the first battery cell layer (L1) and the auxiliary battery module member (1') of the second battery cell layer (L2), wherein the intermediate spacer member (23) comprises:
- a third surface (231) facing upwardly in the height direction (H) and a fourth surface (232) facing downwardly in the height direction (H),
- at least one third hole (233) configured to receive a fastening member (24), the at least one third hole (233) extending in the height direction (H) through the intermediate spacer member (23) with a fourth opening (2331) on the third surface (231) and a fifth opening (2332) on the fourth surface (232),
- at least one fourth hole (234) extending in the height direction (H) with a sixth opening (2341) on the third surface (231),
wherein the fourth hole (234) is configured to receive and retain a fastening member (22) by an interference fit between the fastening member (22) and a fourth hole inner surface (2342) defining the fourth hole (234).

Example 13: The battery module assembly (2) according to example 12, wherein the at least one first fastening member (22) extends through the first hole (14) of the auxiliary battery module member (1') of the second battery cell layer (L2) and into the fourth hole (234) of the intermediate spacer member (23), wherein the battery module assembly (2) further comprises at least one second fastening member (24), and wherein the at least one second fastening member (24) extends through the at least one third hole (233) and into the second hole (15) of the battery module member (1) of the first battery cell layer (L1).

Example 14: The battery module assembly (2) according to any one of examples 12-13, wherein the intermediate spacer member (23) is formed as a frame and/or comprises at least two separate beam members (235, 236).

Example 15: A battery pack (3) comprising a battery module assembly (2) according to any one of examples 8-14.

Example 16: The battery pack (3) according to example 15, further comprising a housing (31) defining an inner space (311) for retaining the battery module assembly (2).

Example 17: The battery pack (3) according to example 16, wherein the housing (31) has a longitudinal extension in a longitudinal direction (L) which corresponds to the longitudinal direction (L) of the battery module member (1) of the first battery cell layer (L 1), a width extension in a width direction (W) which corresponds to the width direction (W) of the battery module member (1) of the first battery cell layer (L1) and a height extension in a height direction (H) which corresponds to the height direction (H) of the battery module member (1) of the first battery cell layer (L1), wherein the housing (31) comprises at least one ledge (312) in the proximity of a bottom surface (313) of the housing (31), wherein the at least one ledge (312) comprises a fifth hole (314) with a seventh opening (315) facing upwardly in the height direction, wherein the battery pack (3) further comprises at least one third fastening member (25), and wherein the at least one third fastening member (25) extends through the at least one first hole (14) of the battery module member (1) of the first battery cell layer (L 1) and into the fifth hole (314) of the at least one ledge (312).

Example 18: The battery pack (3) according to any one of examples 16-17, wherein at least one battery module member (1, 1') is attached to the housing (31) by an auxiliary fastening member (32).

Example 19: The battery pack (3) according to any one of examples 15-18, further comprising at least one cooling element for cooling the battery cells (21) in the battery pack (3).

Example 20: The battery pack (3) according to any one of examples 15-19, wherein the battery cells (21) are cylindrical cells and/or prismatic cells.

Example 21: A vehicle (4) comprising a battery module member (1. 1') according to any one of examples 1-7, a battery module assembly (2) according to any one of examples 8-14, and/or a battery pack (3) according to any one of examples 15-20.

The terminology used herein is for the purpose of describing particular aspects only and is not intended to be limiting of the disclosure. As used herein, the singular forms "a", "an", and "the" are intended to include the plural forms as well, unless the context clearly indicates otherwise. As used herein, the term "and/or" includes any and all combinations of one or more of the associated listed items. It will be further understood that the terms "comprises", "comprising", "includes", and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A battery module member (1, 1') for a battery module assembly (2) for a battery pack (3), wherein the battery module member (1, 1') has a longitudinal extension in a longitudinal direction (L), a width extension in a width direction (W) and a height extension in a height direction (H), wherein the battery module member (1, 1') is formed as a frame configured to enclose and retain a plurality of battery cells (21), as seen in a sectional plane defined by the longitudinal direction (L) and the width direction (W), and wherein the battery module member (1, 1') comprises:
- a first surface (12) facing upwardly in the height direction (H) and a second surface (13) facing downwardly in the height direction (H),
- at least one first hole (14) configured to receive a fastening member (22, 25), the at least one first hole (14) extending in the height direction (H) through the battery module member (1, 1') with a first opening (141) on the first surface (12) and a second opening (142) on the second surface (13),
- at least one second hole (15) extending in the height direction (H) with a third opening (151) on the first surface (12),
wherein the second hole (15) is configured to receive and retain a fastening member (22, 24) by an interference fit between the fastening member (22, 24) and a second hole inner surface (152) defining the second hole (15).

2. The battery module member (1, 1') according to claim 1, wherein the first hole (14) is defined by a substantially smooth first hole inner surface (143).

3. The battery module member (1, 1') according to any one of the preceding claims, wherein the second hole inner surface (152) comprises a thread for the fastening member (22, 24).

4. The battery module member (1, 1') according to any one of the preceding claims, wherein a diameter of the first hole (14) is larger than a diameter of the second hole (15).

5. The battery module member (1, 1') according to any one of the preceding claims, wherein the first hole (14) comprises a first hole portion (144) which extends downwardly from the first surface (12) towards the second surface (13) and a second hole portion (145) which extends from the first hole portion (144) to the second surface (13), wherein the first hole portion (144) has a larger diameter than the second hole portion (145).

6. The battery module member (1, 1') according to any one of the preceding claims, comprising a plurality of first holes (14) and a plurality of second holes (15), wherein the plurality of first and second holes (14, 15) are arranged along an extension of the first surface (12), preferably in a repeated pattern.

7. A battery module assembly (2) for a battery pack (3), comprising a first battery cell layer (L1) comprising a plurality of battery cells (21) which are enclosed and retained by a battery module member (1, 1') according to any one of the preceding claims.

8. The battery module assembly (2) according to claim 7, comprising a second battery cell layer (L2) provided on top of the first battery cell layer (L1), as seen in the height direction (H), wherein the second battery cell layer (L2) comprises a plurality of battery cells (21) which are enclosed and retained by an auxiliary battery module member (1') according to any one of claims 1-6, and wherein the battery module assembly (2) further comprises at least one first fastening member (22, 24) which connects the battery module member (1) of the first battery cell layer (L1) to the auxiliary battery module member (1') of the second battery cell layer (L2).

9. The battery module assembly (2) according to claim 8, wherein the at least one first fastening member (22) extends through the at least one first hole (14) of the auxiliary battery module member (1') of the second battery cell layer (L2) and into the at least one second hole (15) of the battery module member (1) of the first battery cell layer (L1).

10. The battery module assembly (2) according to claim 9, wherein each one of the auxiliary battery module member (1') of the second battery cell layer (L2) and the battery module member (1) of the first battery cell layer (L1) comprises a first side (S1) and a second side (S2) of the frame which extend in the longitudinal direction (L) and are offset in the width direction (W), and a third side (S3) and a fourth side (S4) of the frame which extend in the width direction (W) and are offset in the longitudinal direction (L), wherein a first hole (14) of the at least one first hole (14) is provided on the first side (S 1) and a second hole (15) of the at least one second hole (15) is provided on the second side (S2), wherein the first hole (14) on the first side (S1) is provided a first longitudinal distance (D1) from the third side (S3) and the second hole (15) on the second side (S2) is provided a second longitudinal distance (D2) from the fourth side (S4), and wherein the first and second longitudinal distances (D1, D2) are substantially the same..

11. The battery module assembly (2) according to claim 8, further comprising an intermediate spacer member (23) provided in-between the battery module member (1) of the first battery cell layer (L1) and the auxiliary battery module member (1') of the second battery cell layer (L2), wherein the intermediate spacer member (23) comprises:
- a third surface (231) facing upwardly in the height direction (H) and a fourth surface (232) facing downwardly in the height direction (H),
- at least one third hole (233) configured to receive a fastening member (24), the at least one third hole (233) extending in the height direction (H) through the intermediate spacer member (23) with a fourth opening (2331) on the third surface (231) and a fifth opening (2332) on the fourth surface (232),
- at least one fourth hole (234) extending in the height direction (H) with a sixth opening (2341) on the third surface (231),
wherein the fourth hole (234) is configured to receive and retain a fastening member (22) by an interference fit between the fastening member (22) and a fourth hole inner surface (2342) defining the fourth hole (234).

12. A battery pack (3) comprising a battery module assembly (2) according to any one of claims 7-11.

13. The battery pack (3) according to claim 12, further comprising a housing (31) defining an inner space (311) for retaining the battery module assembly (2).

14. The battery pack (3) according to claim 13, wherein the housing (31) has a longitudinal extension in a longitudinal direction (L) which corresponds to the longitudinal direction (L) of the battery module member (1) of the first battery cell layer (L1), a width extension in a width direction (W) which corresponds to the width direction (W) of the battery module member (1) of the first battery cell layer (L1) and a height extension in a height direction (H) which corresponds to the height direction (H) of the battery module member (1) of the first battery cell layer (L1), wherein the housing (31) comprises at least one ledge (312) in the proximity of a bottom surface (313) of the housing (31), wherein the at least one ledge (312) comprises a fifth hole (314) with a seventh opening (315) facing upwardly in the height direction, wherein the battery pack (3) further comprises at least one third fastening member (25), and wherein the at least one third fastening member (25) extends through the at least one first hole (14) of the battery module member (1) of the first battery cell layer (L1) and into the fifth hole (314) of the at least one ledge (312).

15. A vehicle (4) comprising a battery module member (1. 1') according to any one of claims 1-6, a battery module assembly (2) according to any one of claims 7-11, and/or a battery pack (3) according to any one of claims 12-14.
